Europäisches Patentamt

European Patent Office

Office européen des brevets

(11) Numéro de publication: **0 349 454 B1**

(12) **FASCICULE DE BREVET EUROPEEN**

(45) Date de publication de fascicule du brevet: **23.03.94** (51) Int. Cl.5: **H04N 7/00**

(21) Numéro de dépôt: **89460019.6**

(22) Date de dépôt: **22.06.89**

(54) **Procédé de codage de données d'assistance à la reconstruction d'une image électronique animée sous-échantillonnée.**

(30) Priorité: **24.06.88 FR 8808704**

(43) Date de publication de la demande:
**03.01.90 Bulletin 90/01**

(45) Mention de la délivrance du brevet:
**23.03.94 Bulletin 94/12**

(84) Etats contractants désignés:
**DE GB NL**

(56) Documents cités:
**EP-A- 0 248 711**
**WO-A-87/05770**

**COLLOOUE TVHD 87, Ottawa, 4-8 octobre 1987, pages 6.2.2 - 6.2.28; P. BERNARD et al.: "Analyse de structures de sous-echantillonnage spatio-temporel d'un signal TVHD en vue de sa transmission dans un canal MAC"**

**PROCEEDINGS: ICASSP 87 - 1987 INTERNATIONAL CONFERENCE ON ACOUSTICS, SPEECH, AND SIGNAL PROCESSING, Dallas, Texas, 6-9 avril 1987, vol. 2 des 4, pages 1051-1054, IEEE, New York, US; D.J. VAISEY et al.: "Variable block-size image coding"**

(73) Titulaire: **FRANCE TELECOM**
**6, Place d'Alleray**
**F-75015 Paris(FR)**

Titulaire: **TELEDIFFUSION DE FRANCE S.A.**
**21-27, rue Barbès**
**F-92542 Montrouge Cédex(FR)**

(72) Inventeur: **Henot, Jean-Pierre**
**Le Portail**
**La Touche-Martin**
**F-35510 Thorigne(FR)**

(74) Mandataire: **Corlau, Vincent**
**c/o Cabinet Patrice Vidon,**
**Immeuble Germanium,**
**80 avenue des Buttes de Coesmes**
**F-35700 Rennes (FR)**

Rank Xerox (UK) Business Services
(3.10/3.09/3.3.3)

## Description

Une image de télévision est définie par un certain nombre de paramètres qui représentent l'analyse spatiale et temporelle de cette image (en particulier le nombre d'images par seconde, le nombre de lignes par images et le nombre de points par ligne).

La bande passante nécessaire pour transmettre une image de TVHD peut atteindre des valeurs de l'ordre de 100 MHz. Ainsi pour transmettre ces images sur des canaux à bande passante réduite (par exemple des canaux satellite ayant une bande de l'ordre de la dizaine de Mégahertz) est-il nécessaire d'appliquer à ces images des techniques de réduction de bande passante.

Il est possible de réduire la bande passante du signal à transmettre en utilisant des techniques adaptatives de filtrage de l'image haute définition. Cette image haute définition filtrée a alors une bande passante de base réduite et peut être rééchantillonnée à des fréquences plus basses pour la transmission. Les filtrages étant choisis à l'émetteur de façon adaptative, des données d'assistance sont transmises au décodeur afin que celui-ci reconnaisse le traitement choisi au codeur.

Ces données d'assistance consistent donc en un indicateur du traitement choisi mais peuvent également comprendre des vecteurs de mouvement lorsque de la compensation de mouvement est utilisée.

Ainsi, le document de brevet WO-A-8 705 770 (BRITISH BROADCASTING CORP.) décrit un système de compression d'un signal vidéo, à deux traitements possibles, dont un traitement à compensation de mouvement, les données d'assistance comprenant :
- d'une part une information de choix de traitement, et
- d'autre part, en cas de choix du traitement à compensation de mouvement, une information de vecteur mouvement.

Ce document de brevet ne décrit pas le codage de ces données d'assistance.

Par ailleurs, le document PROCEEDINGS : ICASSP 87 - 1987 INTERNATIONAL CONFERENCE ON ACOUSTICS, SPEECH, AND SIGNAL PROCESSING, Dallas, Texas, 6-9 avril 1987, vol. 2 des 4, pages 1051-1054, IEEE, New York, US décrit un système de codage d'image à taille de blocs variable, chaque bloc pouvant être codé à l'aide d'un algorithme choisi parmi plusieurs algorithmes possibles en fonction de la taille du bloc.

Toutefois, dans ce document, aucun des traitements possibles ne correspond à un traitement à compensation de mouvement (générant une quantité importante de données d'assistance).

Or, le débit des données d'assistance dans le canal de transmission étant limité à 1 Mbit/s environ, la grande quantité d'information que représentent ces données d'assistance, et en particulier quand le traitement choisi est un traitement à compensation de mouvement, nécessite l'utilisation de techniques de réduction de débit.

Aucun des deux documents cités précédemment ne décrit une telle technique lorsque l'un des traitements possibles est un traitement à compensation de mouvement.

Toute méthode de réduction de débit peut être décrite par deux étapes consécutives :
1 : réduction du flot d'informations à transmettre;
2 : codage (ou représentation) de l'information pour transmission.

Les deux étapes ont les propriété suivantes :
- la réduction de l'information est irréversible car elle modifie le signal d'origine. Dans ce cas la réduction d'information peut consister à faire un choix sur un ensemble de points plutôt que en chaque point;
- le codage de l'information est réversible. Cette étape consiste à mettre l'information sous la forme d'une suite de bits qui représente complètement l'information.

Ces deux étapes peuvent produire une réduction de débit.

Une demande de brevet français a été déposée pour un procédé de réduction de débit d'une séquence de données d'assistance à la reconstitution d'une image électronique à partir d'un signal sous échantillonnage. (Dépôt no 8802650 du 2 mars 88 aux noms des mêmes déposants, correspondant à FR-A-2 628 276 publié le 08.09.89).

Mais l'invention qui y est décrite ne résoud pas notamment le problème du codage de l'information pour transmission.

Selon l'invention, ce problème ainsi que d'autres qui apparaitront par la suite, sont résolus à l'aide d'un procédé de codage des données d'assistance à la reconstruction d'une image électronique appartenant à une séquence d'images, notamment en TVHD, à partir d'un signal d'image comprimé,

le processus de compression du signal d'image consistant à segmenter l'image en blocs sensiblement homogènes de tailles variables ixi dont tous les points peuvent subir un même traitement de compression,

ledit processus de compression comprenant une étape de sélection, pour chaque bloc d'image, d'un traitement optimal parmi plusieurs traitements de compression concurrents réalisés en parallèle, les traitements comprenant notamment au moins un traitement de filtrage d'image,

procédé caractérisé en ce qu'il existe au moins deux tailles possibles de blocs, chacune desdites tailles de blocs correspondant à un niveau distinct de segmentation, depuis un premier niveau de segmentation correspondant à une taille minimale de blocs élémentaires pour chacun desquels a été réalisée ladite sélection d'un traitement optimal de compression, chaque niveau supérieur audit premier niveau correspondant au regroupement de quatre blocs adjacents de niveau inférieur, auxquels correspond un même traitement optimal,

en ce que lesdits traitements de compression concurrents comprennent également au moins un traitement de compression par compensation de mouvement,

en ce que pour chaque bloc issu de ladite segmentation de l'image, lesdites données d'assistance comprennent essentiellement :

- d'une part une information de choix de traitement associée à une première information de segmentation du bloc selon un premier critère, ledit premier critère étant vérifié seulement si tous les blocs élémentaires composant ledit bloc sont associés à un même choix de traitement optimal, et

- d'autre part, en cas de choix du traitement de compression par compensation de mouvement pour le bloc courant, une information de vecteur mouvement représentative dudit bloc associée à une seconde information de segmentation du bloc selon un second critère, ledit second critère étant vérifié seulement si tous les blocs élémentaires composant ledit bloc sont associés à un même vecteur mouvement

en ce qu'on réalise dans une première phase un premier codage hiérarchique croissant, sur au moins deux niveaux de segmentation selon ledit premier critère, pour l'information de choix de traitement, et dans une seconde phase imbriquée dans ladite première phase, en cas de choix du traitement à compensation de mouvement pour un bloc non élémentaire identifié en première phase, un second codage hiérarchique croissant, sur au moins deux niveaux de segmentation selon le second critère, pour l'information de mouvement, lesdits niveaux de segmentation selon le second critère étant obtenus à partir desdits niveaux de segmentation selon le premier critère,

et en ce qu'on génère lesdites données d'assistance sous commande de moyens de séquencement calés sur une procédure prédéterminée de balayage de l'image, en générant sélectivement des informations de segmentation seulement pour les blocs non élémentaires, et en générant sélectivement des informations de choix de vecteur mouvement seulement lors de l'occurrence d'un bloc à traitement optimal par compensation de mouvement.

De façon avantageuse, ledit codage hiérarchique de l'information de choix de traitement est effectué par une opération comprenant les étapes suivantes:

- on positionne, pour chaque traitement, un bit de choix de traitement associé à chaque bloc élémentaire de l'image, ledit bit prenant l'information de validité ou non du traitement correspondant pour le bloc associé;

- on explore itérativement les positions prises par les bits de choix de traitement au niveau supérieur de segmentation, et on valide l'existence d'un bloc à traitement homogène audit niveau supérieur de segmentation en cas d'homogénéïté des bits de choix de traitement pour tous les blocs formant ledit niveau supérieur de segmentation.

Parallèlement, ledit codage hiérarchique de l'information de mouvement est préférentiellement effectué par une opération comprenant les étapes suivantes:

- on mémorise la valeur du vecteur mouvement associé à un premier bloc élémentaire, et on initialise un compteur associé audit vecteur mouvement;

- on explore itérativement la valeur du vecteur mouvement associé au niveau supérieur de segmentation, en incrémentant ledit compteur à chaque occurrence dudit vecteur mouvement, et on valide l'existence d'un bloc à mouvement homogène audit niveau supérieur de segmentation en cas de traitement homogène par compensation de mouvement audit niveau supérieur de segmentation et lorsque ledit compteur marque le nombre de blocs composant ledit niveau supérieur de segmentation.

Avantageusement, on associe à chaque bloc ixi, à tous les niveaux de segmentation, d'une part un premier bit d'homogénéïté de choix de traitement, et/ou d'autre part un second bit d'homogénéïté du mouvement,

et en ce qu'on positionne systématiquement tous lesdits premiers et/ou seconds bits, en parallèle pour chaque niveau de segmentation, et indépendamment de la valeur du bit correspondant au niveau inférieur de segmentation.

D'autre part, de façon préférentielle, lesdites données d'assistance sont générées sous forme d'une phrase de longueur variable émise pour chaque surbloc du niveau maximal de segmentation, chaque phrase comprenant au moins l'un des mots suivants:

- un premier mot identifiant la segmentation de choix de traitement dans ledit surbloc;
- au moins un second mot identifiant ledit traitement associé à chaque bloc ixi homogène de niveau maximal;
- un troisième mot identifiant la segmentation de mouvement dans ledit surbloc;
- au moins un quatrième mot identifiant le vecteur mouvement à chaque bloc ixi de niveau maximal à traitement par compensation de mouvement et à vecteur mouvement homogène.

Avantageusement, on ne transmet que ledit premier mot et/ou ledit troisième mot dans une phrase que dans le cas où il existe au moins un bloc homogène non élémentaire dans le bloc courant du niveau maximal de segmentation, et on ne transmet au moins un quatrième mot qu'en cas d'occurrence d'un bloc ixi à traitement à compensation de mouvement.

Dans un mode de réalisation préférentiel, lesdits mots sont mémorisés dans des moyens de mémorisation adressés par lesdits premiers et/ou seconds bits d'homogénéité, et chacun desdits mots est codé de façon distincte sur un format commun de même longueur, et en ce que les mots d'une phrase donnée sont transmis selon un ordre implicite connu du récepteur.

D'autres caractéristiques et avantages de l'invention apparaîtront à la lecture de la description suivante d'un mode de réalisation préférentiel, donné à titre illustratif et non limitatif, et des dessins annexés dans lesquels :

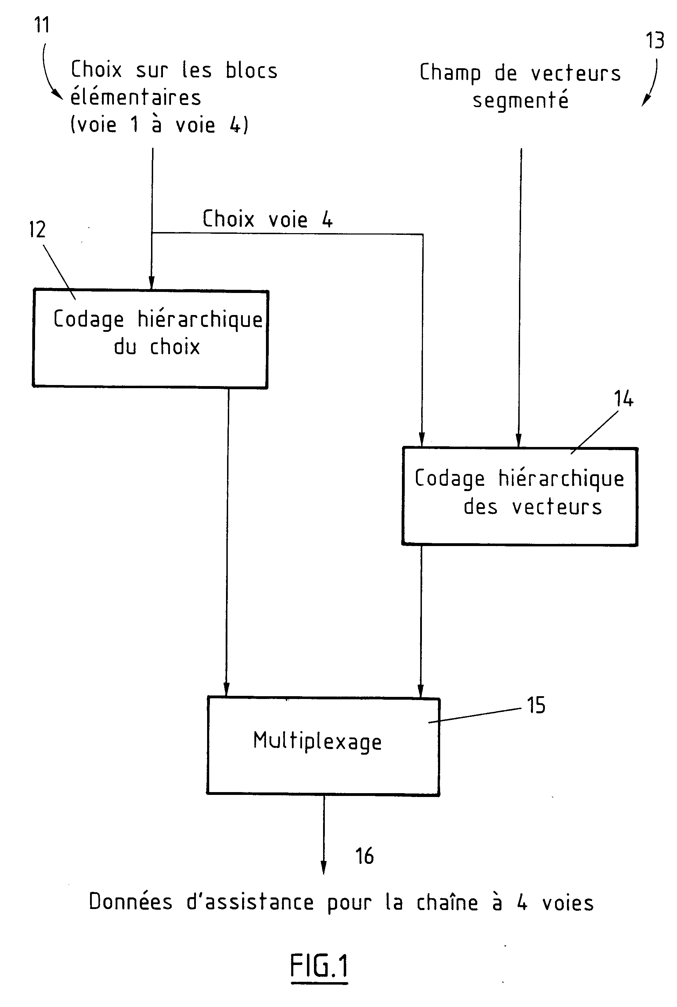

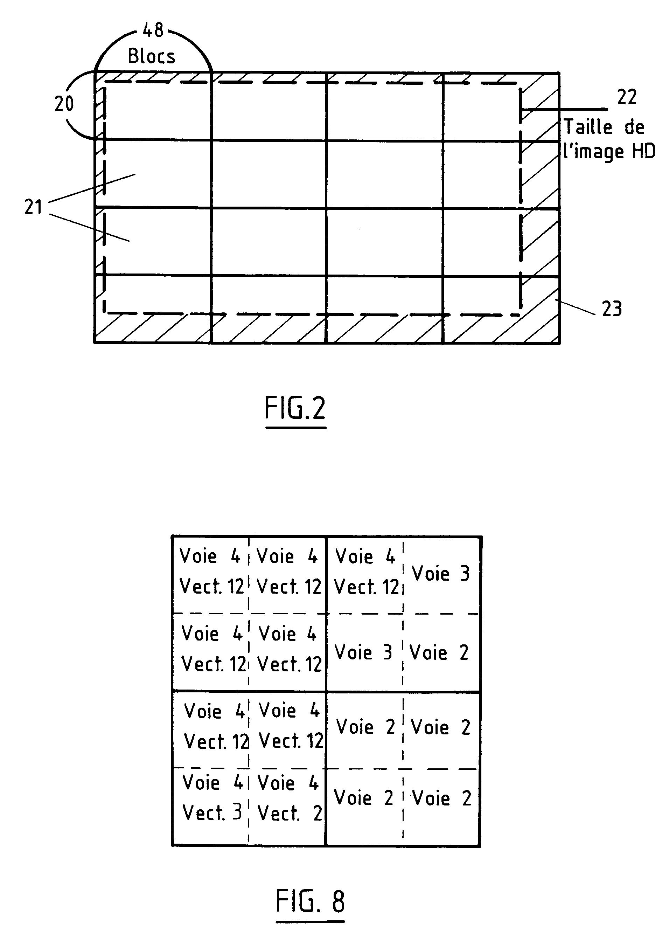

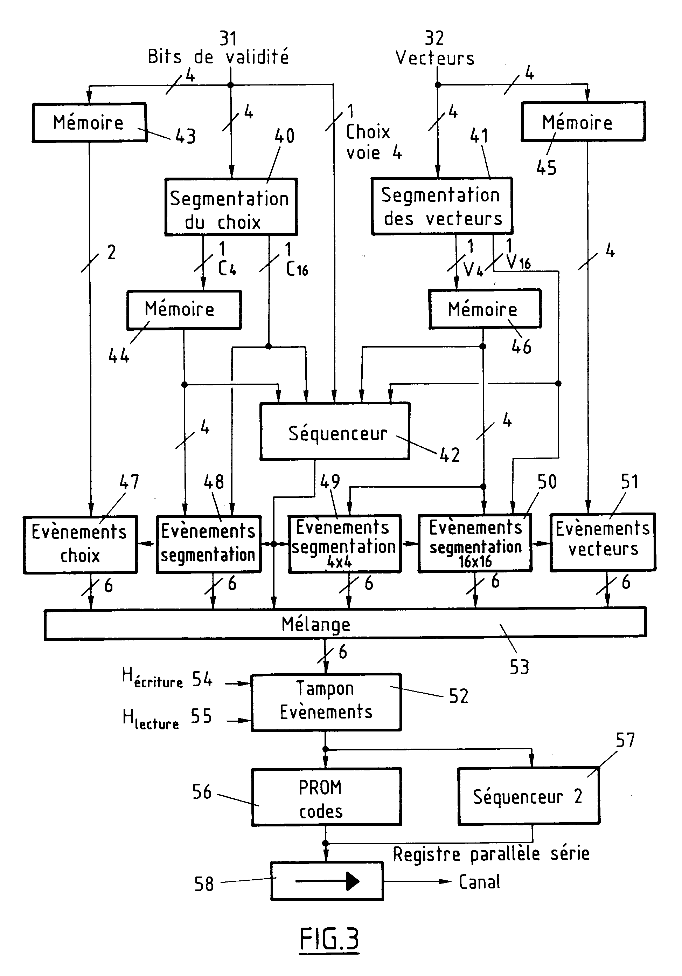

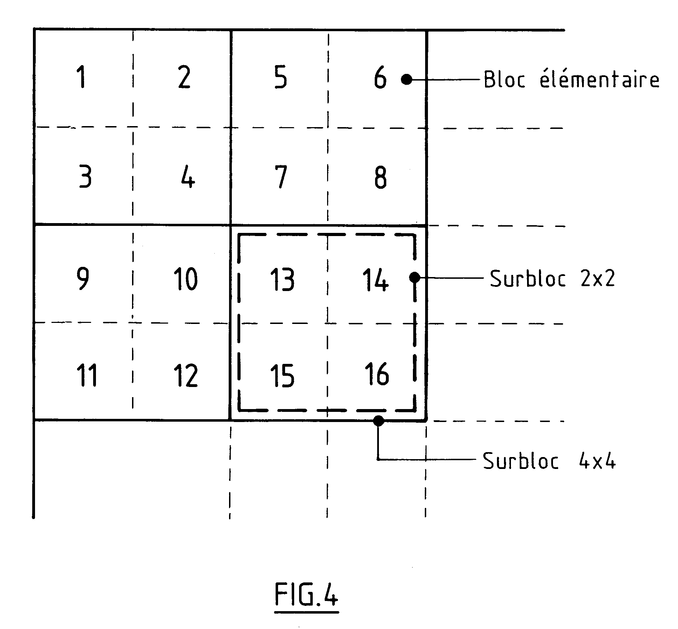

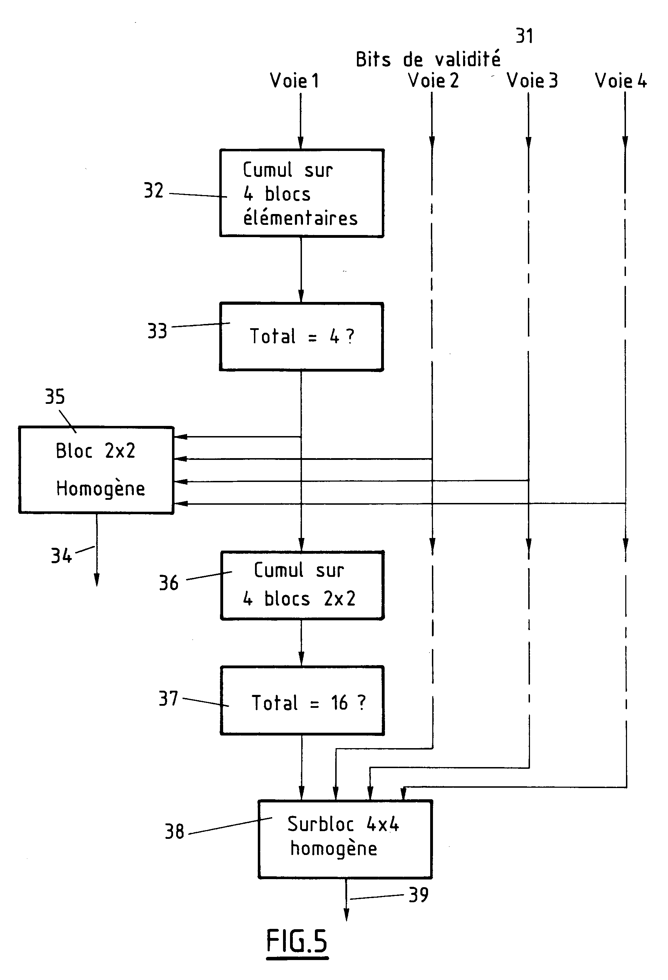

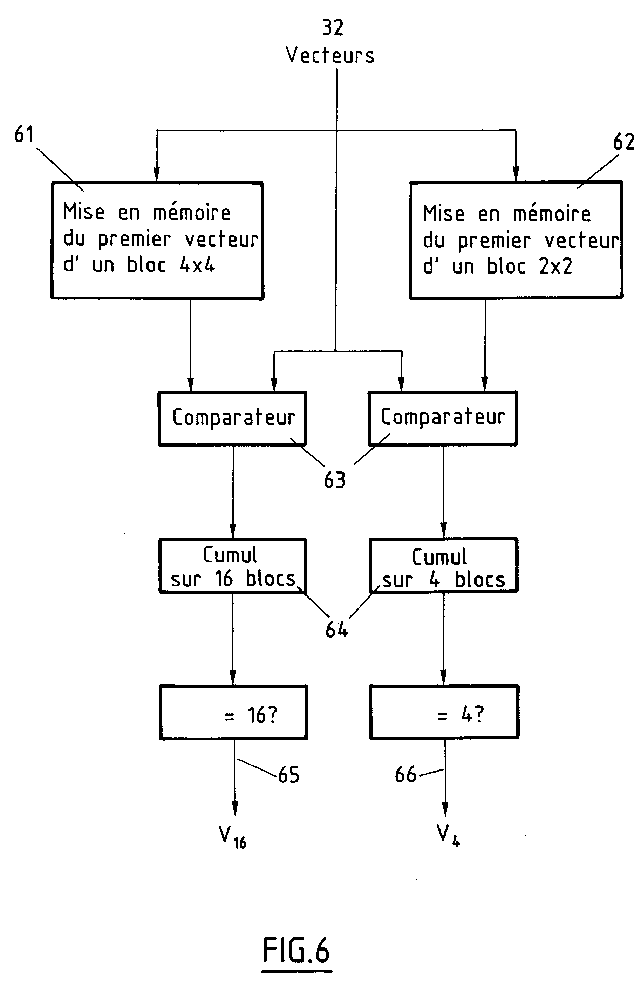

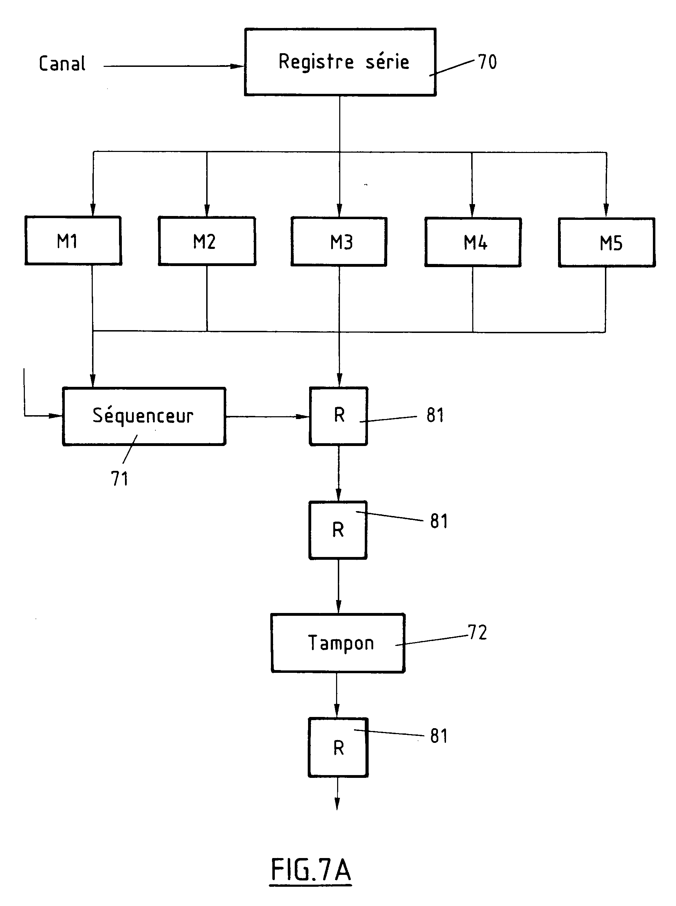

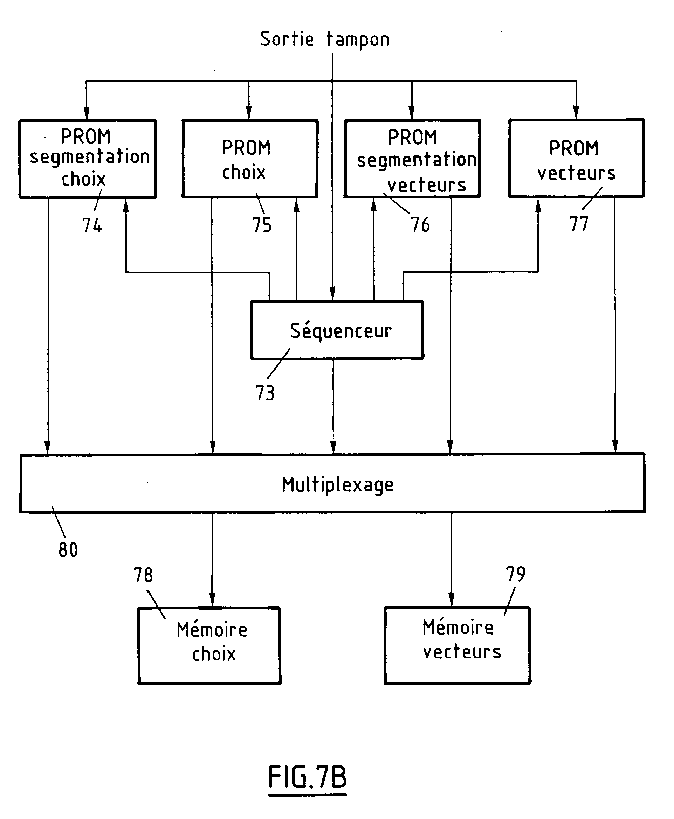

. la figure 1 illustre le principe de codage hiérarchique imbriqué, selon l'invention ;
. la figure 2 illustre le découpage de l'image haute définition en portions d'1/16 d'image environ, chaque portion comprenant environ 20x48 blocs élémentaires d'image;
. la figure 3 est un schéma synoptique illustrant une implantation fonctionnelle préférentielle dans un codeur de mise en oeuvre du procédé suivant l'invention, à l'émission ;
. la figure 4 illustre l'ordre de balayage des blocs élémentaires dans un surbloc 4x4, dans un mode préférentiel de mise en oeuvre de l'invention ;
. la figure 5 illustre le principe de codage hiérarchique croissant pour l'opération de segmentation d'image, en fonction du choix de traitement ;
. la figure 6 illustre le principe de codage hiérarchique croissant de l'invention, pour la segmentation d'image, en fonction des vecteurs mouvements des blocs traités par la voie de compression par compensation de mouvement ;
. les figures 7a et 7b sont un schéma synoptique d'une implantation matérielle préférentielle dans un décodeur de mise en oeuvre du procédé selon l'invention, à la réception ;
. la figure 8 est un exemple de configuration de traitement sélectif des 16 blocs d'un surbloc 4x4.

Dans le cas particulier, mais non limitatif du codage d'une image TVHD pour la transmission dans un canal HD-MAC, une solution possible est de choisir en chaque zone d'image parmi quatre types de sous échantillonnage possibles. Le sous échantillonnage optimal est choisi au codeur et les points sous-échantillonnés correspondants sont transmis au décodeur. Celui-ci reçoit en plus les données d'assistance qui lui permettent de reconstruire au mieux l'image HD (haute définition).

Quatre traitements de sous échantillonnage sont possibles :

3 traitements de filtrage linéaire dont :
- 1 filtrage pour les mouvements nuls
- 1 filtrage pour les mouvements d'amplitude moyenne
- 1 filtrage pour les mouvements d'amplitude élevée.

Le quatrième traitement est un traitement utilisant de la compensation de mouvement.

L'originalité réside en la définition d'un codage hiérarchique imbriqué. C'est-à-dire que dans une première phase est décrite l'information de choix de traitement 11 (voie 1 à voie 4) sur des blocs d'image à l'aide d'un codage hiérarchique 12 (ou par quadtree). (Fig.1)

Ensuite pour les blocs traités en voie 4 (voie à compensation de mouvement), les vecteurs 13 utilisés pour ce bloc sont à nouveau décrits par un codage hiérarchique 14. Ce qui donne une structure de codage hiérarchique imbriqué, qui est multiplexée (15).

L'information décrite de cette façon au codeur (fig.3) est transmise (16) au décodeur (fig.7a-7b), qui retrouve alors le traitement fait en chaque bloc d'image et éventuellement les vecteurs de mouvement associés.

En entrée du codage hiérarchique imbriqué on dispose de :
- une information de choix de traitement par bloc élémentaire (11)
- un champ de vecteurs segmenté (13)

Il faut rappeler que l'image haute définition comprend :

- 1440 points utiles par ligne
- 1150 lignes utiles par image
- 25 images par seconde.

Les lignes utiles de l'image sont entrelacées en deux trames de 575 lignes (deux trames forment une image).

La taille des blocs élémentaires sur lesquels le choix du traitement se fait est de 8 points par 8 lignes dans la trame sur 2 trames (soit 128 points).

L'image HD est formée de 180 blocs en horizontal et 72 blocs en vertical soit au total 12960 blocs.

Le champ de vecteur est segmenté préalablement, c'est-à-dire qu'à chaque bloc élémentaire correspond un vecteur unique.

Par ailleurs l'image HD est subdivisée en seize zones de tailles égales, chaque zone se voyant affectés 15 vecteurs de mouvement disponibles pour caractériser les déplacements des blocs élémentaires traités par la voie 4.

Lors du codage hiérarchique, on ne dispose que du numéro de vecteur indiquant le vecteur choisi parmi les quinze vecteurs disponibles, dans le seizième d'image concerné; l'amplitude des vecteurs est transmise par ailleurs. La subdivision en zones d'images se fait de la manière suivante, en relation avec la figure 2.

La taille cumulée des seize sous-images 21 est supérieure à celle de l'image HD 22. Dans la zone hachurée 23 les vecteurs sont supposés constants et cette zone n'est pas prise en compte par le codage hiérarchique.

On dispose donc pour chaque bloc élémentaire de:
- 4 bits (31) $b_i$ (i = 1 à 4) indiquant le traitement choisi:

  $b_i$ = 0, traitement i non choisi

  $b_i$ = 1, traitement i choisi

  1 seul $b_i$ est non nul à la fois.
- 4 bits (32) $V_i$ (i = 1 à 4) indiquant le numéro du vecteur dans la zone d'image concernée.

Les trois étapes du codage hiérarchique imbriqués consistent donc en :

1 - codage hiérarchique du traitement choisi (12)

2 - codage hiérarchique des vecteurs pour la voie 4 (14)

3 - multiplexage des données résultant des deux codages hiérarchiques (15).

Les figures 3 à 6 illustrent le fonctionnement séquentiel d'un dispositif préférentiel de mise en oeuvre de l'opération.

En entrée on dispose du choix de traitement par blocs élémentaires de 8 points sur 8 lignes sur 2 trames.

Ce choix consiste en 4 bits (31) appelés bits de validité. La segmentation consiste à indiquer si le choix est homogène sur un surbloc comprenant 4 ou 16 blocs élémentaires.

L'ordre d'entrée des valeurs (bits de validité) est celui indiqué sur la figure 4.

On cumule (32) les bits de validité des voies 1, 2, 3 et 4 sur 4 blocs élémentaires (blocs 1 à 4 puis 5 à 8 puis 9 à 12 puis 13 à 16...). En comparant (33) le total cumulé à 4 cela permet de savoir si le bloc composé de 4 blocs élémentaires est homogène (35). L'indication de cette homogénéité consiste en 1 bit C4 34. Le cumul 36 est également fait sur les bits 1 à 16 (puis 17 à 32 pour le surbloc suivant) ce qui, en comparant (37) le total à 16 permet de savoir si le surbloc est homogène (38).

Pour un surbloc on dispose de 4 bits C4 34 qui sont mémorisées et d'un bit C16 39 qui indique la segmentation du surbloc.

C16 = 1 : le bloc 4x4 composé de 16 blocs élémentaires est homogène;

C16 = 0 : bloc 4x4 inhomogène;

C4 = 1 : le bloc 2x2 composé de 4 blocs élémentaires est homogène;

C4 = 0 : bloc 2x2 inhomogène.

Ces 5 bits décrivent totalement la segmentation du surbloc.

La segmentation des vecteurs est assez similaire à celle de choix de traitement: cependant les données d'entrée 32 (les vecteurs) peuvent prendre les 15 des 16 valeurs possibles que leur permettent les 4 bits sur lesquels ils sont définis (alors que les bits de validité 31, sur 4 bits, ne prenaient que 4 valeurs possibles, un bit à 1 induisant que les autres étaient à 0).

La segmentation ne procède plus de la seule accumulation des bits. Il faut mettre en mémoire le premier vecteur de chaque surbloc 2 x 2 62 ou 4 x 4 61 et comparer (63) les vecteurs à cette valeur. Le cumul 64 des résultats des comparaisons permet de savoir si le bloc est homogène.

Le résultat consiste en :
- 1 bit v16 65 qui indique si le champ de vecteurs est homogène sur le surbloc 4 x 4.

5

- 4 bits v4 66 qui indiquent si le champ est homogène sur chaque surbloc 2 x 2. Ces bits sont mémorisés.

Les valeurs correspondant aux choix et aux vecteurs sont mémorisées (43, 44, 45, 46).

L'ensemble des données d'assistance consistent en :

- la segmentation de l'indication du traitement choisi
- les choix de traitement
- la segmentation du champ de vecteurs pour les blocs traités en voie 4
- les vecteurs pour les blocs traités en voie 4.

Ces données sont décrites sous forme de mots de 6 bits appelés évènements dont les valeurs se trouvent dans des PROM appelées "évènements" (47, 48, 49, 50, 51):

4 mots correspondent aux choix voie 1 à voie 4;

17 mots correspondent à la segmentation des données indiquant le choix de traitement (correspondant aux situations allant d'un surbloc 4x4 homogène aux cas de blocs 2x2 inhomogènes) et sont générés (ou adressés) à partir des C4, C16;

15 mots correspondent aux 15 vecteurs possibles;

17 mots correspondent à la segmentation du champ de vecteurs pour un surbloc 4 x 4 traité en voie 4;

2 mots correspondent à la segmentation du champ de vecteurs pour un surbloc 2 x 2 traité en voie 4.

Un exemple de représentation de ces mots sur 6 bits est présenté en Table I.

Le codage hiérarchique imbriqué intervient dans le fait que ne sont transmis les vecteurs que lorsque un bloc en voie 4 existe et que la segmentation du champ de vecteur dépend de la taille du bloc voie 4.

En particulier lorsque le bloc voie 4 est de la taille d'un bloc élémentaire, aucune segmentation n'est à transmettre car le champ de vecteurs ne peut pas être plus segmenté.

TABLE I : Table des événements

| | | | |
|---|---|---|---|
| 17 mots | { | 000001 | bloc 4x4 homogène |
| | | 000010 | |
| | | | bloc 4x4 inhomogène-description des blocs 2x2 homogènes ou inhomogènes. |
| | | 010001 | |
| 4 mots | { | 010010 | voie 1 |
| | | 010011 | voie 2 |
| | | 010100 | voie 3 |
| | | 010101 | voie 4 |
| 17 valeurs | { | 010110 | champ 4x4 homogène (dans le cas d'un bloc 4x4 traité en voie 4) |
| | | 010111 } | champ 4 x 4 inhomogène description en blocs 2x2 homogènes ou inhomogène |
| | | 100100 | |
| 2 valeurs | { | 100101 | champ 2 x 2 homogène, ou inhomogène (dans le cas d'un bloc 2x2 traité en voie 2) |
| | | 100110 | |
| 15 valeurs | { | 100111 | vecteurs 1 à 15 |
| | | .... | |
| | | 110101 | |

A partir des segmentations du choix detraitement et des champs de vecteurs, ainsi que de l'indication des blocs traités en voie 4, il génère les signaux permettant de lire les événements dans les mémoires adéquates et de les multiplexer (53).

Une fois multiplexés les évènements sont stockés dans le tampon évènements (52).

7

Le tampon (52) est l'organe permettant de réguler le flot de données. C'est une mémoire de 6 bits de large pouvant contenir 1024 mots.

Les données y sont écrites à un rythme dépendant de l'horloge locale (54), et lues à un rythme dépendant de l'horloge du canal (55).

Comme représenté en Fig. 3, l'émission consiste en trois éléments :
- 1 PROM de codes 56 qui contient les mots à longueur variable correspondant aux différents évènements décrits.
- 1 séquenceur 57 indiquant les bits valides.
- 1 registre parallèle série 58 qui permet de formater les données à l'usage du canal.

TABLE II : Mots émis.

| | |
|---|---|
| 1 | surbloc homogène |
| 0 0000 } | 16 mots possibles; segmentation en blocs 2x2 |
| 0 1111 } | homogènes ou non |
| 00 } | choix voie 1 |
| : } | |
| 11 } | choix voie 4 |
| 1 | champ 4 x 4 homogène |
| 0 0000 } | 16 mots possibles - segmentation |
| } | des champs en blocs |
| 0 1111 } | 2x2 |
| 1 | champ 2x2 homogène |
| 0 | champ 2x2 inhomogène |
| 0000 } | 15 mots ---> 15 vecteurs |
| 1110 } | |

Comme représenté en Fig. 7a, 7b, le traitement à la réception des séquences de données d'assistance est le suivant.

Les bits sont reçus au décodeur sous forme d'un train série reçu dans un registre série 70.

Les mots les plus larges contenant 5 bits, ce train série est désérialisé afin d'obtenir des mots de 5 bits qui pourront être ainsi interprétés. Les mémoires M1, M2, M3, M4, M5 interprètent les mots de 5 bits reçus afin de les reformater sous forme d'évènements 47, 48? 49, 50, 51 décrits en fig. 3 qui sont des mots à longueur fixe.

La mémoire M1 correspond aux évènements de segmentation de l'indication de choix de traitement.

La mémoire M2 correspond aux choix de traitement.

La mémoire M3 correspond à la segmentation à partir des surblocs 4 x 4.

La mémoire M4 correspond à la segmentation à partir des surblocs 2 x 2.

La mémoire M5 correspond aux vecteurs de mouvement.

A partir des évènements reçus, un séquenceur 71 détermine les événements à recevoir et gère les données à envoyer à la mémoire tampon 72. Les circuits 81 sont des registres.

La mémoire tampon (72) contient des événements. Sa taille permet de contenir le nombre maximum d'évènements qui peut être nécessaire pour décrire un bloc, soit de l'ordre de 32 évènements.

Elle est écrite avec une horloge dérivée de l'horloge du canal et lue avec une horloge dérivée de l'horloge interne au décodeur (horloge synchrone à l'image).

Par l'intermédiaire d'un nouveau séquenceur 73 et de mémoires 74, 75, 76, 77 interprétant les évènements, les valeurs des choix de traitement et des vecteurs de mouvement sont stockés dans des mémoires appropriées 78, 79 pour les 16 blocs élémentaires qui composent le surbloc 4 x 4, après multiplexage 80. A titre d'exemple, la séquence descriptive du surbloc 4x4 de la figure 8 s'exprimera de la manière suivante :

. un premier mot (segmentation par choix de traitement) signifiant : "voici un surbloc 4x4 comprenant le premier, le troisième et le quatrième blocs 2x2 homogènes, le second bloc 2x2 étant inhomogène"

. 7 mots décrivant respectivement : le choix de traitement pour le premier surbloc 2x2, les 4 choix de traitement pour les blocs élémentaires du second surbloc 2x2; le choix de traitement pour les troisième et quatrième blocs 2x2 homogènes (4;4,3,3,2;4;2);

. 1 mot indiquant que le premier surbloc 2x2, à traitement homogène en voie 4 à compensation de mouvement, est homogène du point de vue du vecteur mouvement représentant. Ce mot est suivi d'un mot désignant que le vecteur représentant est le 12ème vecteur.

. 1 mot indiquant que le troisième surbloc 2x2 à traitement homogène par la voie 4 de compensation de mouvement est un bloc inhomogène du point de vue des vecteurs mouvement des blocs élémentaires. Ce mot est suivi des quatre mots désignant sucessivement dans l'ordre de balayage, les quatre vecteurs représentant chacun des blocs élémentaires du surbloc 2x2 (12,12,3,2).

## Revendications

1. Procédé de codage des données d'assistance à la reconstruction d'une image électronique appartenant à une séquence d'images, notamment en TVHD, à partir d'un signal d'image comprimé,

le processus de compression du signal d'image consistant à segmenter l'image en blocs sensiblement homogènes de tailles variables ixi dont tous les points peuvent subir un même traitement de compression,

ledit processus de compression comprenant une étape de sélection, pour chaque bloc d'image, d'un traitement optimal parmi plusieurs traitements de compression concurrents réalisés en parallèle, les traitements comprenant notamment au moins un traitement de filtrage d'image,

procédé caractérisé en ce qu'il existe au moins deux tailles possibles de blocs, chacune desdits tailles de blocs correspondant à un niveau distinct de segmentation, depuis un premier niveau de segmentation correspondant à une taille minimale de blocs élémentaires pour chacun desquels a été réalisée ladite sélection d'un traitement optimal de compression, chaque niveau supérieur audit premier niveau correspondant au regroupement de quatre blocs adjacents de niveau inférieur auxquels correspond un même traitement optimal,

en ce que lesdits traitements de compression concurrents comprennent également au moins un traitement de compression par compensation de mouvement,

en ce que pour chaque bloc issu de ladite segmentation de l'image, lesdites données d'assistance comprennent essentiellement :

- d'une part une information de choix de traitement associée à une première information de segmentation du bloc selon un premier critère, ledit premier critère étant vérifié seulement si tous les blocs élémentaires composant ledit bloc sont associés à un même choix de traitement optimal, et

- d'autre part, en cas de choix du traitement de compression par compensation de mouvement pour le bloc courant, une information de vecteur mouvement représentative dudit bloc associée à une seconde information de segmentation du bloc selon un second critère, ledit second critère étant vérifié seulement si tous les blocs élémentaires composant ledit bloc sont associés à un même vecteur mouvement

en ce qu'on réalise dans une première phase un premier codage hiérarchique croissant, sur au moins deux niveaux de segmentation selon ledit premier critère, pour l'information de choix de traitement, et dans une seconde phase imbriquée dans ladite première phase, en cas de choix du traitement à compensation de mouvement pour un bloc non élémentaire identifié en première phase, un second codage hiérarchique croissant, sur au moins deux niveaux de segmentation selon le second critère, pour l'information de mouvement, lesdits niveaux de segmentation selon le second critère étant obtenus à partir desdits niveaux de segmentation selon le premier critère,

et en ce qu'on génère lesdites données d'assistance sous commande de moyens de séquencement calés sur une procédure prédéterminée de balayage de l'image, en générant sélectivement des informations de segmentation seulement pour les blocs non élémentaires, et en générant sélectivement des informations de choix de vecteur mouvement seulement lors de l'occurrence d'un bloc à traitement optimal par compensation de mouvement.

2. Procédé selon la revendication 1, caractérisé en ce que ledit codage hiérarchique de l'information de choix de traitement est effectué par une opération comprenant les étapes suivantes:

EP 0 349 454 B1

- on positionne, pour chaque traitement, un bit de choix de traitement associé à chaque bloc élémentaire de l'image, ledit bit prenant l'information de validité ou non du traitement correspondant pour le bloc associé;
- on explore itérativement les positions prises par les bits de choix de traitement au niveau supérieur de segmentation, et on valide l'existence d'un bloc à traitement homogène audit niveau supérieur de segmentation en cas d'homogénéïté des bits de choix de traitement pour tous les blocs formant ledit niveau supérieur de segmentation.

3. Procédé selon la revendication 1, caractérisé en ce que ledit codage hiérarchique de l'information de mouvement est effectué par une opération comprenant les étapes suivantes:
- on mémorise la valeur du vecteur mouvement associé à un premier bloc élémentaire, et on initialise un compteur associé audit vecteur mouvement;
- on explore itérativement la valeur du vecteur mouvement associé au niveau supérieur de segmentation, en incrémentant ledit compteur à chaque occurrence dudit vecteur mouvement, et on valide l'existence d'un bloc à mouvement homogène audit niveau supérieur de segmentation en cas de traitement homogène parcompensation de mouvement audit niveau supérieur de segmentation et lorsque ledit compteur marque le nombre de blocs composant ledit niveau supérieur de segmentation.

4. Procédé selon la revendication 2 et/ou 3, caractérisé en ce qu'on associe à chaque bloc ixi, à tous les niveaux de segmentation, d'une part un premier bit d'homogénéïté de choix de traitement, et/ou d'autre part un second bit d'homogénéïté du mouvement,
et en ce qu'on positionne systématiquement tous lesdits premiers et/ou seconds bits, en parallèle pour chaque niveau de segmentation, et indépendamment de la valeur du bit correspondant au niveau inférieur de segmentation

5. Procédé selon la revendication 1, caractérisé en ce qu'on définit trois niveaux de segmentation à partir de blocs élémentaires constitués de 8 points sur 8 lignes sur 2 trames consécutives.

6. Procédé selon la revendication 1, caractérisé en ce que lesdites données d'assistance sont générées sous forme d'une phrase de longueur variable émise pour chaque surbloc du niveau maximal de segmentation, chaque phrase comprenant au moins l'un des mots suivants:
- un premier mot identifiant la segmentation de choix de traitement dans ledit surbloc;
- au moins un second mot identifiant ledit traitement associé à chaque bloc ixi homogène de niveau maximal;
- un troisième mot identifiant la segmentation de mouvement dans ledit surbloc;
- au moins un quatrième mot identifiant le vecteur mouvement à chaque bloc ixi de niveau maximal à traitement par compensation de mouvement et à vecteur mouvement homogène.

7. Procédé selon la revendication 6, caractérisé en ce qu'on ne transmet ledit premier mot et/ou ledit troisième mot dans une phrase que dans le cas où il existe au moins un bloc homogène non élémentaire dans le bloc courant du niveau maximal de segmentation.

8. Procédé selon la revendication 6, caractérisé en ce qu'on ne transmet au moins un quatrième mot qu'en cas d'occurrence d'un bloc ixi à traitement à compensation de mouvement.

9. Procédé selon les revendications 4 et 6, caractérisé en ce que lesdits mots sont mémorisés dans des moyens de mémorisation adressés par lesdits premiers et/ou seconds bits d'homogénéïté.

10. Procédé selon la revendication 6 caractérisé en ce que chacun desdits mots est codé de façon distincte sur un format commun de même longueur, et en ce que les mots d'une phrase donnée sont transmis selon un ordre implicite connu du récepteur.

**Claims**

1. Method for the encoding of data for assistance in the reconstruction of an electronic image belonging to a sequence of images, particularly in HDTV, from a compressed image signal,
the process for compression of the image signal consisting of the segmentation of the image into

10

substantially homogeneous blocks of variable sizes i × i, all the dots of which may be subjected to the same compression processing,

the said compression process comprising a step involving the selection, for each image block, of an optimum processing amongst several concurrent compression processings carried out in parallel, the processings comprising in particular at least one image filtering processing,

a method characterised in that there are at least two possible block sizes, each of the said block sizes corresponding to a distinct segmentation level, from a first segmentation level corresponding to a minimum size of elementary blocks for each of which the said selection of an optimum compression processing has been carried out, each level above the said first level corresponding to the grouping of four adjacent blocks of lower level to which the same optimum processing corresponds,

in that the said concurrent compression processings also comprise at least one compression processing by motion compensation,

in that, for each block emerging from the said image segmentation, the said assistance data comprise essentially:

- on the one hand, an item of information on the choice of processing associated with a first item of information on the segmentation of the block according to a first criterion, the said first criterion being satisfied only if all the elementary blocks comprising the said block are associated with the same choice of optimum processing, and

- on the other hand, in the event of a choice of compression processing by motion compensation for the current block, an item of information on the motion vector representative of the said block associated with a second item of information on segmentation of the block according to a second criterion, the said second criterion being satisfied only if all the elementary blocks comprising the said block are associated with the same motion vector,

in that, in a first stage, a first hierarchical encoding in increasing order is carried out, on at least two levels of segmentation according to the said first criterion, for the item of information on the choice of processing and, in a second stage overlapping with the said first stage, in the event of a choice of the processing with motion compensation for a non-elementary block identified in the first stage, a second hierarchical encoding in increasing order, on at least two levels of segmentation according to the second criterion, for the item of information on motion, the said levels of segmentation according to the second criterion being obtained from the said levels of segmentation according to the first criterion,

and in that the said assistance data are generated under the control of sequencing means locked into a predetermined image scanning procedure, by selectively generating items of segmentation information only for the non-elementary blocks, and by selectively generating items of information on the choice of motion vector only during the occurrence of a block with optimum processing by motion compensation.

2. Method according to Claim 1, characterised in that the said hierarchical encoding of the information on the choice of processing is carried out by an operation comprising the following steps:

- for each processing, a processing choice bit associated with each elementary block of the image is set, the said bit carrying the information on the validity or non-validity of the corresponding processing for the associated block;

- the settings taken by the processing choice bits at the upper level of segmentation are explored iteratively, and the existence of a block with homogeneous processing at the said upper level of segmentation is validated in the event of homogeneity of processing choice bits for all the blocks forming the said upper level of segmentation.

3. Method according to Claim 1, characterised in that the said hierarchical encoding of the information on motion is carried out by an operation comprising the following steps:

- the value of the motion vector associated with a first elementary block is memorised, and a counter associated with the said motion vector is initialised;

- the value of the motion vector associated with the upper level of segmentation is explored iteratively by incrementing the said counter at each occurrence of the said motion vector, and the existence of a block with homogeneous motion at the said upper level of segmentation is validated in the event of homogeneous processing by motion compensation at the said upper level of segmentation and when the said counter indicates the number of blocks comprising the said upper level of segmentation.

11

EP 0 349 454 B1

**4.** Method according to Claim 2 and/or 3, characterised in that, with each i × i block, at all levels of segmentation, is associated on the one hand a first bit indicating the homogeneity of the choice of processing and/or on the other hand a second bit indicating the homogeneity of the motion,

and in that all the said first and/or second bits are systematically set in parallel for each level of segmentation, and independently of the value of the bit corresponding to the lower level of segmentation.

**5.** Method according to Claim 1, characterised in that three levels of segmentation are defined from elementary blocks consisting of 8 dots on 8 lines on 2 consecutive frames.

**6.** Method according to Claim 1, characterised in that the said assistance data are generated in the form of a sentence of variable length emitted for each superblock of the maximum level of segmentation, each sentence comprising at least one of the following words:
- a first word identifying the segmentation by the choice of processing in the said superblock;
- at least one second word identifying the said processing associated with each homogeneous i × i block of maximum level;
- a third word identifying the segmentation of motion in the said superblock;
- at least one fourth word identifying the motion vector at each i × i block of maximum level with processing by motion compensation and with homogeneous motion vector.

**7.** Method according to Claim 6, characterised in that the said first and/or the said third word are transmitted in a sentence only when there is at least one non-elementary homogeneous block in the current block of the maximum level of segmentation.

**8.** Method according to Claim 6, characterised in that at least one fourth word is transmitted only in the event of the occurrence of an i × i block with motion compensation processing.

**9.** Method according to Claims 4 and 6, characterised in that the said words are memorised in memorisation means addressed by the said first and/or second homogeneity bits.

**10.** Method according to Claim 6, characterised in that each of the said words is encoded distinctly using a common format of the same length, and in that the words of a given sentence are transmitted according to an implicit order known to the recipient.

**Patentansprüche**

**1.** Verfahren zur Kodierung von Hilfsdaten für die Rekonstruktion eines elektronischen Bildes aus einer Bildsequenz, insbesondere im hochauflösenden Fernsehen, ausgehend von einem komprimierten Bildsignal,

das Kompressionsverfahren des Bildsignals besteht darin, das Bild in etwa homogene Blöcke variabler ixi Größe zu segmentieren, so daß alle Punkte dieser Blöcke dem gleichen Kompressionsverfahren unterworfen werden können,

wobei für jeden Bildblock besagtes Kompressionsverfahren eine Auswahlphase für ein optimales Verfahren unter mehreren parallel verlaufenden und in Konkurrenz zueinander stehenden Kompressionsverfahren durchläuft, wobei diese Verfahren insbesondere mindestens ein Bildfilterungsverfahren umfassen,

dadurch gekennzeichnet, daß es mindestens zwei Blockgrößen gibt, wobei jede der besagten Blockgrößen einem verschiedenen Segmentierungsniveau entspricht, ausgehend von einem ersten Segmentierungsniveau, das einer minimalen Elementarblockgröße entspricht, wobei jeder dieser Elementarblöcke der besagten Auswahl eines optimalen Kompressionsverfahrens unterworfen wurde, und wobei jedes Niveau oberhalb des besagten ersten Niveaus der Gruppierung vierer beieinander liegender Blöcke niedrigeren Niveaus entspricht, denen das gleiche Optimalverfahren zugeordnet ist,

daß die besagten konkurrierenden Kompressionsverfahren auch mindestens ein Kompressionsverfahren mittels Bewegungskompensation umfassen,

daß für jeden Block, der sich aus der besagten Bildsegmentierung ergibt, die besagten Hilfsdaten hauptsächlich folgendes umfassen:
- einerseits, eine Verfahrens-Auswahlinformation, die mit einer ersten Information bezüglich der Blocksegmentierung gemäß eines ersten Kriteriums zusammenhängt, wobei besagtes erstes

12

EP 0 349 454 B1

Kriterium nur dann erfüllt ist, wenn alle Elementarblöcke, aus denen sich besagter Block zusammenstellt, derselben Optimalverfahrensauswahl zugeordnet sind und

- andererseits, falls die Auswahl des Kompressionsverfahrens nach Bewegungskompensation für den laufenden Block erfolgte, eine Bewegungsvektorinformation, welche repräsentativ ist für den besagten Block und einer zweiten Information bezüglich der Segmentierung des Blocks nach einem zweiten Kriterium zugeordnet ist, wobei das zweite Kriterium nur dann erfüllt ist, wenn alle Elementarblöcke, aus denen sich der Block zusammenstellt, demselben Bewegungsvektor zugeordnet sind,

daß man in einer ersten Phase eine erste Kodierung zunehmender Rangordnung der Verfahrens-Auswahlinformation über mindestens zwei Segmentierungsniveaus gemäß des besagten ersten Kriteriums durchführt, und daß man in einer zweiten Phase, welche in der besagten ersten Phase eingebettet ist, falls die Wahl auf ein Bewegunsgskompensationsverfahren für einen nicht elementaren Block, der in der ersten Phase identifiziert wurde, fällt, eine zweite Kodierung zunehmender Rangordnung der Bewegungsinformation über mindestens zwei Segmentierungsniveaus gemäß des zweiten Kriteriums durchführt, wobei die Segmentierungsniveaus gemäß dem zweiten Kriterium aus den Segmentierungsniveaus gemäß dem ersten Kriterium gewonnen werden,

und daß besagte Hilfsdaten unter dem Befehl sequentieller Ordnungsmittel erzeugt werden, die auf ein vorher festgelegtes Bildabtastverfahren fixiert sind, wobei Segmentierungsinformationen nur für die nicht elementaren Blöcke selektiv erzeugt werden und Bewegungsvektor-Auswahlinformationen nur dann selektiv erzeugt werden, wenn ein Block vorkommt, dessen optimales Verfahren auf Bewegungskompensation beruht.

2. Verfahren nach Anspruch 1, dadurch gekennzeichnet, daß die Rangordnungskodierung der Verfahrens-Auswahlinformation durch eine Prozedur erfolgt, welche die folgenden Schritte umfaßt:
- für jedes Verfahren wird ein Auswahlbit, das jeweils einem jeden Elementarbildblock zugeordnet ist, positioniert, wobei besagtes Bit die Gültigkeits- bzw. Ungültigkeitsinformation des entsprechenden Verfahrens des zugeordneten Blocks annimmt;
- die durch die Verfahrensauswahlbits des höheren Segmentierungsniveaus eingenommenen Stellungen werden iterativ untersucht und die Existenz eines Blocks, der einem homogenen Verfahren unterzogen wurde, wird auf dem besagten höheren Segmentierungsniveau validiert, falls die Homogenität der Verfahrensauswahlbits aller Blöcke, die das besagte höhere Segmentierungsniveau bilden, gegeben ist.

3. Verfahren nach Anspruch 1, dadurch gekennzeichnet, daß die besagte Rangordnungskodierung der Bewegungsinformation durch eine Prozedur erfolgt, welche die folgenden Schritte umfaßt:
- der Wert des einem ersten Elementarblock zugeordneten Bewegungsvektors wird gespeichert und ein dem besagten Bewegungsvektor zugeordneter Zähler wird initialisiert;
- der Wert des dem höheren Segmentierungsniveau zugeordneten Bewegungsvektors wird dadurch iterativ untersucht, daß der besagte Zähler bei jedem Vorkommen des besagten Bewegungsvektors inkrementiert wird, und man validiert die Existenz eines Blocks homogener Bewegung für das höhere Segmentierungsniveau im Falle eines homogenen Bewegungs-Kompensationsverfahren für das höhere Segmentierungsniveau, und wenn der Zähler die Zahl der Blöcke anzeigt, die das höhere Segmentierungsniveau bilden.

4. Verfahren nach Anspruch 2 und/oder 3, dadurch gekennzeichnet, daß jedem ixi Block auf allen Segmentierungsniveaus einerseits ein erstes Verfahrensauwahl-Homogenitätsbit und/oder andererseits ein zweites Bewegungshomogenitätsbit zugeordnet wird,

und daß alle besagten ersten und/oder zweiten Bits für jedes Segmentierungsniveau systematisch parallel positioniert werden, und zwar unabhängig vom Wert des entsprechenden Bits auf dem unteren Segmentierungsniveau.

5. Verfahren nach Anspruch 1, dadurch gekennzeichnet, daß drei Segmentierungsniveaus definiert werden, ausgehend von Elementarblöcken, die durch 8 Punkte auf 8 Zeilen zweier aufeinanderfolgender Punktraster gebildet werden.

6. Verfahren nach Anspruch 1, dadurch gekennzeichnet, daß die besagten Hilfsdaten in der Form eines Satzes variabler Länge erzeugt werden, welcher für jeden übergeordneten Block des maximalen Segmentierungsniveaus gesendet wird, wobei jeder Satz mindestens eines der folgenden Wörter

13

enthält:

- ein erstes Wort, welches die Segmentierung des Auswahlverfahrens im übergeordneten Block identifiziert;
- wenigstens ein zweites Wort, welches das einem jeden homogenen ixi Block maximalen Niveaus zugeordnete Verfahren identifiziert;
- ein drittes Wort, welches die Bewegungssegmentierung im übergeordneten Block identifiziert;
- wenigstens ein viertes Wort, welches den Bewegungsvektor bei jedem ixi Block maximalen Niveaus, mit Bewegungs-Kompensationsverahren und homogenem Bewegungsvektor, identifiziert.

7. Verfahren nach Anspruch 6, dadurch gekennzeichnet, daß das besagte erste Wort und/oder das besagte dritte Wort eines Satzes nur dann gesendet wird, wenn mindestens ein homogener, nicht elementarer Block, im laufenden Block des maximalen Segementierungsniveaus existiert.

8. Verfahren nach Anspruch 6, dadurch gekennzeichnet, daß wenigstens ein viertes Wort nur dann gesendet wird, wenn ein ixi Block, der einem Bewegungs-Kompensationsverfahren unterworfen ist, auftritt.

9. Verfahren nach den Ansprüchen 4 und 6, dadurch gekennzeichnet, daß besagte Wörter in Speichern gespeichert werden, welche durch die besagten ersten und/oder zweiten Homogenitätsbits adressiert werden.

10. Verfahren nach Anspruch 6, dadurch gekennzeichnet, daß jedes der besagten Wörter in verschiedener Weise gemäß eines gemeinsamen Formats gleicher Länge kodiert wird und dadurch, daß die Wörter eines gegebenen Satzes gemäß einer impliziten Ordnung gesendet werden, die dem Empfänger bekannt ist.

Choix sur les blocs
élémentaires
(voie 1 à voie 4)

Champ de vecteurs
segmenté

11

13

12

Choix voie 4

Codage hiérarchique
du choix

14

Codage hiérarchique
des vecteurs

15

Multiplexage

16

Données d'assistance pour la chaîne à 4 voies

FIG.1

48
Blocs

20

21

22
Taille de
l'image HD

23

FIG.2

| Voie 4 Vect. 12 | Voie 4 Vect. 12 | Voie 4 Vect. 12 | Voie 3 |
| Voie 4 Vect. 12 | Voie 4 Vect. 12 | Voie 3 | Voie 2 |
| Voie 4 Vect. 12 | Voie 4 Vect. 12 | Voie 2 | Voie 2 |
| Voie 4 Vect. 3 | Voie 4 Vect. 2 | Voie 2 | Voie 2 |

FIG. 8

FIG.3

| | | | |
|---|---|---|---|
| 1 | 2 | 5 | 6 •——— Bloc élémentaire |
| 3 | 4 | 7 | 8 |
| 9 | 10 | 13 | 14 •——— Surbloc 2x2 |
| 11 | 12 | 15 | 16 |

——— Surbloc 4x4

## FIG.4

Bits de validité

Voie 1    Voie 2    Voie 3    Voie 4

**31**

**32** — Cumul sur 4 blocs élémentaires

**33** — Total = 4 ?

**35** — Bloc 2x2 Homogène

**34**

**36** — Cumul sur 4 blocs 2x2

**37** — Total = 16 ?

**38** — Surbloc 4x4 homogène

**39**

<u>FIG.5</u>

32
Vecteurs

61

62

Mise en mémoire
du premier vecteur
d' un bloc 4x4

Mise en mémoire
du premier vecteur
d' un bloc 2x2

Comparateur

Comparateur

63

Cumul
sur 16 blocs

Cumul
sur 4 blocs

64

= 16?

= 4?

65

66

$V_{16}$

$V_4$

## FIG.6

Canal ⟶ | Registre série | ⟍ 70

M1    M2    M3    M4    M5

Séquenceur ⟶ R ⟍ 81
⟍ 71

R ⟍ 81

Tampon ⟍ 72

R ⟍ 81

## FIG.7A

Sortie tampon

PROM
segmentation
choix
74

PROM
choix
75

PROM
segmentation
vecteurs
76

PROM
vecteurs
77

Séquenceur
73

Multiplexage
80

78
Mémoire
choix

79
Mémoire
vecteurs

## FIG.7B